# EUROPEAN PATENT APPLICATION

(11) **EP 4 775 553 A1**
(43) Date of publication of application: **15.07.2026**
(21) Application number: 25224484.3
(22) Date of filing: 17.12.2025
(51) Int. Cl.: C04B 14/28, C04B 28/10, C04B 28/12, C04B 20/04, C04B 18/16

(54) **METHOD FOR PRODUCING A BUILDING PRODUCT AND CORRESPONDING COMPOSITION**

(30) Priority: 17.12.2024 IT 202400028656
(71) Applicant: GREEN SEA S.R.L., 33030 Varmo (UD) (IT)
(72) Inventor: Vanin, Mario, 31055 Quinto di Treviso (TV) (IT); Bianchi, Mara, 47122 Forli' (FC) (IT)
(74) Representative: Petraz, Gilberto Luigi

(57) **Abstract**

The present invention concerns a composition for producing a building product, as well as a method for obtaining it, wherein an inert part and a binding part are provided. The composition is dry, that is, in the form of granulate or powder.

## Description

### FIELD OF THE INVENTION

The present invention concerns a method for producing a building product and also a corresponding composition. In particular, the building product is a mix type product, composed of a dry mixture, also known as an inert material, and a binder, such as for example mortar, skimming or leveling plaster, aggregate, finishes and suchlike. The building product can be used in both renovations as well as new buildings.

### BACKGROUND OF THE INVENTION

Mortars and plasters for making various artefacts have long been known and used in the construction sector. Currently on the market there are products obtained by mixing binders with aggregates, typically sands, of different nature and origin depending on the location of the production and/or mixing industry.

There is also the practice of preparing the material directly on site by mixing a binder with aggregates, not always in equal and correct proportions, to which the operator sometimes adds, based on their own deduction, different materials.

One problem related to known products is of an environmental and regulatory nature, namely the extraction of the inert part.

The type of industrial product currently offered on the market, as well as the techniques of artisanal preparation of the materials, are mainly used in the sector of new civil and industrial construction, restoration and green building.

In the event the product is artisanally prepared, the main problem is the potential human error in the preparation of the mixture, which often affects the technical and mechanical characteristics of the product; some steps in the procedure can also be omitted, such as the thorough washing of the inert material and collection of any impurities, due to a lack of knowledge or for reasons of time.

Plasters were historically created both for aesthetic purposes and also to homogenize the return of the substrate, in some cases also in order to have a sacrificial layer that deteriorates but can easily be replaced, and which protects the substrate on which it is applied. In their composition, especially in terms of binder, they follow the evolution in the appropriation by man of the use of materials present in nature.

The matrix appears to be unique; however, in reality each material has different characteristics depending on the "extraction" location, and this also applies to the characterization of the binders.

As for the aggregates, on the other hand, their use was closely connected to the material found on site. This was the concept of affordability in manufacturing the product. Therefore, while the binders underwent a "modification" with respect to the chemical reaction triggered first by a natural drying process and then by a cooking one, the aggregates were always used exactly as they were found.

However, this is not compatible with the factor of industrialized production, which is increasingly felt in the sector. This factor has proven to be unsuited for the insertion of artificial chemicals into the production process which heavily alter the naturalness and consequently the behavior of the finished product in the application phase, in particular with regard to the durability and compatibility with the substrate.

Souidi Asma et al. "The effect of mussel shell powder on the thermal and mechanical properties of plaster", Construction & Building Materials, vol 416, XP087467478, describes a method for producing a gypsum composition comprising gypsum, a versatile building material, as a binder, together with 4-20% by weight of mussel shells as an inert part, which in the pure state consist mainly of aragonite and calcite, with a granulometry of 80 µm, with percentages of 61% and 30%, respectively. This document teaches how to use bleach to perform the cleaning, which however involves the problem of potentially polluting the final product obtainable irreversibly. In addition, the use of gypsum may result in a very short duration of the mixture because it is subject to moisture degradation as well as carbonation. The indicated granulometry is not compatible with a building use.

Martinez-Garcia Carolina et al.: "Impact of mussel shell aggregates on air lime mortars. Pore structure and carbonation", Journal of Cleaner Production, Vol. 215, p. 650-668, XP093290931, discloses a method for producing an air lime-based coating mortar composition comprising a powder of non-aged commercial hydrated lime or a slaked lime putty, and calcareous sand and mussel shell sand as aggregates. This document provides to heat-treat the mussel shells at 135 °C for 32 minutes, but this treatment does not eliminate all the polluting organic parts that then negatively affect any mixtures in which they are used. In addition, the binder is only the hydrated lime, and the obtainable mixture is brittle and incoherent, and therefore not suitable for use in construction. Another problem of the raw material obtainable in this way is the high aggressivity of any mixes obtained with these mixtures, regarding molds/microorganisms and suchlike that are then unhealthy for civil and industrial environments in general.

US-A1-2024/150545 discloses a method for producing a flooring material comprising adding at least one biogenic reinforcing filler containing 25% by weight of biogenic calcium carbonate particles in the form of aragonite. The biogenic reinforcing filler containing calcium carbonate particles in the form of aragonite described in this document is obtained by: preparing shells of bivalve mollusks, selected from the group comprising mussels, clams, hard clams, oysters and scallops, and/or of gastropod mollusks; granulating these shells to obtain a granular material; and micronizing this granular material to obtain the reinforcing filler in the form of a powder containing carbonate particles in the form of aragonite. D3 also discloses that the method can comprise a step of washing the shells, followed by a step of drying the shells and finally grinding the shells to obtain granulometries of 0.1-10 mm. The composition of this document also comprises an elastomer.

Lertwattanaruk Pusit et al.: "Utilization of ground waste seashells in cement mortars for masonry and plastering", Journal of Environmental Management, Vol. 111, p. 133-141, XP028945470, discloses a method for producing a cement mortar for masonry and plaster, composed of between 14 and 16% by weight of Portland cement, 1 and 3% by weight of ground shells, 68% by weight of sand and 15% by weight of water. The shells used are shells of green mussel, carpet clams, clam shells and oyster shells, which have been cleaned, dried in the oven and then coarsely ground. D4 also discloses that the crystalline structures of the shells of green mussels and clams are largely composed of aragonite and calcite. In this document, the shells are used for decorative purposes only, since they are provided in negligible quantities (1-3%).

Martinez-Garcia Carolina et al.: "Performance of mussel shell as aggregate in plain concrete", Construction & Building Materials, Vol. 139, p. 570-583, XP029944961, discloses a method for producing concrete, the composition of which comprises a binder and natural aggregates and mussel shells, wherein the binder is CEM II, or CEM II mixed with 6-20% of silica fly ash (which is a pozzolan) and limestone, and 0-5% of minor components. This document also provides to heat-treat the shells at 135 °C for 32 minutes, with the inconveniences already indicated above. In addition, cement is provided in the composition in this document.

There is therefore the need to perfect a method for producing a building product as well as a corresponding composition which can overcome at least one of the disadvantages of the state of the art.

To do this, it is necessary to solve the technical problem of perfecting a method and producing a composition that are eco-sustainable.

In particular, one purpose of the present invention is to provide a composition and perfect a method for producing building products using materials of natural origin.

Another purpose of the present invention is to provide a composition and perfect a method for producing building products that allow to achieve products with excellent characteristics, not only from an aesthetic point of view but also with regard to mechanical and durability properties.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to solve the technical problem described above in a new and original way, also achieving considerable advantages compared to the state of the prior art, a composition according to the present invention for producing a building product comprises an inert part and a binding part. The inert part and binding part are in the form of granulate or powder.

In accordance with one aspect of the present invention, the inert part comprises marine origin aragonite. In particular, the inert part comprises aragonite obtained from *capulerium.* Capulerium is essentially composed of, or consists of, bivalve shells, in particular of mussels, clams and/or oysters. Advantageously, the aragonite in the form of granulate or powder is obtained by crushing or grinding the capulerium.

Doing so achieves at least the advantage of obtaining a building product with increased eco-sustainability compared to known products, precisely thanks to the presence of crushed capulerium which is known to be, among other things, a waste product of fishing vessels used for harvesting by harvesters and mussel processing and marketing consortia.

This, in fact, allows to solve another environmental problem particularly felt in the fishing sector, namely, the disposal of shells, which have to be treated as waste, which entails great difficulties and considerable burdens for harvesters and their fishing vessels, and for those who process mussels to market them.

It should be noted that the composition according to the present invention does not contain elastomers. These materials are not provided in any green building materials.

In addition, it has been found that the use of crushed capulerium allows to give the building product improved properties compared to known building products. Capulerium is composed of inorganic constituents such as aragonite CaCO₃ (chemically calcium carbonate), or calcium phosphate Ca (PO₄)₂, which animals extract from seawater and which are supplemented by organic substances, usually a set of complex proteins secreted by the mantle. For example, the bivalve shells that make up the capulerium have physical-chemical characteristics such as to constitute an inert material suitable for the production of traditional plasters and mortars for the restoration of terracotta and cladding walls, including those of the remediating and/or heat-reflecting type, with characteristics of: possibility of being used in all domestic and/or industrial environments, in civil and/or industrial construction, in environments with even high salt concentrations, where good breathability and permeability to water vapor are required, also achieving thermal reflectance characteristics.

In accordance with some embodiments of the present invention, the capulerium is cleaned of aggressive substances and impurities. Preferably, after the cleaning step the capulerium is heat-treated to be dried, and subsequently ground in order to obtain the material in various granulometries. The heat treatment can be performed at a minimum of 200 °C for at least 45 minutes, preferably at least 230 °C for at least 50 minutes, more preferably at 250 °C for 1 hour, possibly for longer depending on requirements. Preferably, the capulerium is then screened according to the different granulometries required.

In accordance with some embodiments of the present invention, the marine origin aragonite represents between 30% and 60% by weight, preferably between 35% and 50% by weight, of the total weight of the composition. Total weight of the composition is understood as the weight of the inert part and of the binding part, before they are mixed with clean water. Advantageously, the inert part also comprises, in addition to aragonite, an aggregate composed of sands, quartz and/or *cocciopesto,* preferably local.

According to some embodiments of the invention, the aragonite has a varied granulometry, preferably lower than 3 mm. More preferably, the aragonite has a varying granulometry curved from 0 to 3 mm. Even more preferably, the aragonite can have a granulometry greater than 150 µm, even more preferably greater than 500 µm, even more preferably greater than 750 µm, even more preferably greater than 1 mm. This granulometry is different from what is provided in the state of the art, in particular from the article in the name of Souidi Asma *et al.*, which provides granules of 80 µm.

In accordance with some embodiments of the invention, the aggregate, if present, has a varied granulometry, preferably lower than 3 mm. More preferably, the aggregate has a varying granulometry curved from 0 to 3 mm. Even more preferably, the aggregate can have a granulometry greater than 150 µm, even more preferably greater than 500 µm, even more preferably greater than 750 µm, even more preferably greater than 1 mm.

According to some embodiments of the invention, the binding part comprises at least one of either hydrated lime, metakaolin, pozzolana or natural hydraulic lime NHL, preferably consisting of a mixture of at least two of these components.

In accordance with the above purposes and to solve the technical problem described above in a new and original way, also achieving considerable advantages compared to the state of the prior art, a method according to the present invention for producing a building product provides to prepare an inert part and a binding part, both in the form of granulate or powder. Preferably, the aforementioned steps of preparing the inert part and the binding part are performed to create the composition. Advantageously, the inert part and the binding part are mixed together, or supplied separately but in a same conditioning.

According to one aspect of the present invention, the inert part comprises marine origin aragonite. In particular, the aragonite is the main chemical component of the capulerium. To obtain the granulate or powder form, the capulerium is crushed or ground. The capulerium is essentially composed of, or consists of, bivalve shells, in particular of mussels, clams and/or oysters.

In accordance with some embodiments of the present invention, the method provides, before the aforementioned inert and binding parts are prepared, to prepare capulerium, preferably from recycling, and to dry and grind the capulerium. Preferably, the method also provides to screen the ground capulerium, so as to check its granulometry. The step of drying the capulerium is advantageously carried out by means of a heat treatment thereof. The heat treatment can take place at a minimum of 200 °C for at least 45 minutes, preferably at least 230 °C for at least 50 minutes, more preferably at 250 °C for 1 hour, possibly for longer depending on requirements.

Favorably, the grinding is performed to obtain a varying granulometry of the aragonite, preferably lower than 3 mm, more preferably a varying granulometry curved from 0 mm to 3 mm.

Favorably, when the aggregate is present, the grinding is performed to obtain a varying granulometry of the aggregate, preferably lower than 3 mm, more preferably a varying granulometry curved from 0 mm to 3 mm.

Compared to the prior art documents referenced above, in the present invention the cooking temperature and time, and the preparation are clearly different. The preparation cycle identified by the Applicant allows them to obtain a raw material for possible use in construction and possibly also in other fields of use, since it does not contain active organic parts, but only reactive ones.

Moreover, all UNI-EN standards that aggregates for concrete production have to comply with, as also specified in the second paper by Martines-Garcia Carolina *et al.*, cite how fundamental it is to cancel all the organic substance in order to not undermine and/or modify the power of the binders, as well as the need to not increase the porosity of the mixtures (since it goes in the opposite direction with the addition of this absorbent raw material) so as to not affect the strength of the concrete.

### DESCRIPTION OF SOME EMBODIMENTS OF THE PRESENT INVENTION

Unless otherwise defined, all the technical and scientific terms used here and hereafter have the same meaning as commonly understood by a person with ordinary experience in the field of the art to which the present invention belongs. Even if methods and materials similar or equivalent to those described here can be used in practice and in the trials of the present invention, the methods and materials are described hereafter as an example. In the event of conflict, the present application shall prevail, including its definitions. The materials, methods and examples have a purely illustrative purpose and shall not be understood restrictively.

All measurements are carried out, unless otherwise indicated, at 25°C (ambient temperature) and at atmospheric pressure controlled according to required parameters.

All temperatures are in degrees Celsius, unless otherwise indicated.

All percentages and ratios indicated shall be understood to refer to the weight of the total composition (w/w), unless otherwise indicated.

All percentage ranges indicated here are given with the provision that the sum with respect the overall composition is 100%, unless otherwise indicated.

All the ranges reported here shall be understood to include the extremes, including those that report a range "between" two values, unless otherwise indicated.

The present description also includes the ranges that derive from uniting or overlapping two or more ranges described, unless otherwise indicated.

The present description also includes the ranges that can derive from the combination of two or more punctual values described, unless otherwise indicated.

Wherever water mentioned, it is to be understood as clean water, unless otherwise indicated.

All granulometries have been determined by means of sieving, using - in a known manner - a series of sieves with meshes of different sizes.

A composition according to the present invention comprises an inert part and a binding part, both in the form of granulate or powder.

The inert part comprises marine origin aragonite, particularly from recycling. The aragonite is obtained through the grinding of capulerium, in turn composed of bivalve shells such as, for example, mussels, clams and/or oysters. The aragonite can have a varying granulometry, curved between 0 and 3 mm.

A 'curved mixture' is understood as a mixture with various, carefully selected granulometries. In particular, in the context of the present invention, the granulometry curve has been studied and prepared to create a homogeneous and compact mass of aragonite granules, wherein the finer granules and powders are positioned in the voids between the coarser granules, closing and homogeneously compacting the final mixture that is obtained.

Thanks to these processes, able to create a closed and homogeneous mix, the mixture obtained, mixed with clean water, allows to reach, after a suitable seasoning period, the excellent results and characteristics of the final matured mix.

The aragonite represents between 35% and 50% by weight of the total weight of the composition.

The inert part can comprise, in addition to the above-mentioned aragonite, an aggregate composed of sands and quartz which can be local, that is, originating from the zone in which the composition is prepared. Like the aragonite, the aggregate can have a varying granulometry, curved from 0.00 to 3.00 mm, and also represents a weight identifiable between 35% and 50% by weight of the total weight of the composition.

The binding part consists instead of hydrated lime, metakaolin and pozzolana and/or natural hydraulic lime NHL. These compounds each represent between 1% and 20% by weight of the total weight of the dry composition.

A method for obtaining the composition described heretofore comprises the following steps.

It is first provided to prepare the capulerium, composed of shells of bivalves such as mussels, clams and/or oysters in the desired quantity. Then a step of cleaning and subsequent drying of the capulerium is carried out, preferably by means of a heat treatment, in particular using a heater.

Once dried, there is provided a step of grinding the capulerium in order to obtain a granulate of various sizes and then, following this, the granulate obtained is screened. In particular, the screening is carried out in such a way as to obtain a varying granulometry of the ground capulerium, curved between 0 and 3 mm.

Subsequently, upon completion of the inert part, an aggregate composed of sands, quartz and possibly also cocciopesto is prepared, with a varying granulometry curved from 0 to 3 mm. Cocciopesto is understood as a mixture of fragments of bricks (tiles and/or bricks) crushed into a fine mortar, for example lime-based.

For the binding part, a predetermined quantity of hydrated lime, a predetermined quantity of metakaolin and a predetermined quantity of pozzolana and/or hydraulic lime NHL are prepared.

The aforementioned compounds are mixed in the proportions indicated above.

The composition therefore comes in the form of granulate or powder, and is to be mixed with a predefined quantity of clean water, which can range from 20% to 40%, preferably from 25% to 35%, by weight of the weight of the composition. That is, 100 kg of dry composition should be mixed with 20 to 40 kg of water.

The invention will be further specified by referring to some specific examples.

### EXAMPLE 1

The dry composition is as indicated in table 1.

| | Compound | Proportion by weight |
|---|---|---|
| Inert part | Aragonite | 30-50% |
| | Aggregate (sands, quartzes and cocciopesto) | 30-50% |
| Binding part | Hydrated lime | 4-10% |
| | Metakaolin | 10-20% |
| | Pozzolana and NHL | 1-10% |

The aragonite and the aggregate both have a variable granulometry curved from 0-3 mm.

This example of composition is intended for use as plaster mortar, masonry and cladding mortar, dehumidifying mortar for remediation, for both interior as well as exterior use.

To obtain the building product, in the form of a ready-to-use mix, referring to 100 kg of the aforementioned dry composition, between 27 kg and 33 kg of clean water have to be added, varying depending on the temperature of the environment in which the product is prepared.

### EXAMPLE 2

The dry composition is as indicated in table 2.

| | Compound | Proportion by weight |
|---|---|---|
| Inert part | Aragonite | 30-50% |
| | Aggregate (sands, quartzes and cocciopesto) | 30-50% |
| Binding part | Hydrated lime | 4-10% |
| | Metakaolin | 10-20% |
| | Pozzolana/NHL | 1-10% |

The aragonite and the aggregate both have a variable granulometry curved from 0-1.2 mm.

This example composition is intended for use as a skimmer and/or leveler for exteriors and interiors, and a skimmer to complete the remediation cycle for wet masonry subject to rising humidity.

To obtain the building product, in the form of a ready-to-use mix, referring to 100 kg of the aforementioned dry composition, between 27 kg and 33 kg of clean water have to be added, depending on the temperature of the environment in which the product is prepared.

### EXAMPLE 3

A remediating mortar was prepared starting from the composition of example 1 as above, which was then matured for 5 days at 20 °C and 95% relative humidity (RH), and then for 23 days at 20 °C and 50% RH. The mortar was then conditioned for 24 hours at 23 °C and 50% RH.

The mortar thus hardened was used to determine the water vapor permeability (according to UNI EN 1015-19:2008), the flexural and compressive strength (UNI EN 1015-11:2019), the adhesion to the substrate (UNI EN 1015-12:2016), the water absorption coefficient due to capillarity (UNI EN 1015-18:2004), the apparent volume mass of the hardened dried mortar (UNI EN 1015-10:2007), and the thermal conductivity (UNI EN 1015:2020).

The tests were carried out at a temperature of 22 °C.

With regard to the water vapor permeability Wᵥₚ, five samples with an average thickness of 20 cm and an average weight of 0.552 kg were made with the hardened mortar.

The average water vapor permeability Wᵥₚ value was measured at 1.6 x 10⁻¹¹ Kg / s m Pa.

During the test, the following were also measured: the permeance to water vapor A with an average value of 8.0 x 10⁻¹⁰ Kg / m² s Pa, the resistance factor to the diffusion of water vapor µ with an average value of 13, and the thickness of the air layer equivalent to the diffusion of water vapor S_{d} with an average value of 0.25 m.

To determine the flexural and compressive strength of the hardened mortar, three samples with sizes of 40 mm x 40 mm x 160 mm were prepared, with maturation for 5 days at 20 °C and 95% RH inside the mold, 2 days at 20 °C and 95% RH, and 21 days at 20 °C and 65% RH.

A maximum load Ft of 600 N was reached for the three samples, for an average flexural strength Rf of 1.4 MPa. The three samples were subjected to two compressive resistance tests, with a maximum load Fc of 6000 N for an average compressive resistance Rc of 3.8 MPa.

To determine the adhesion between the mortar for exterior and interior plastering and the substrate, five samples were prepared by applying each time two coats of mortar, each of 1 cm, on a RUEN concrete slab measuring 400 x 400 x 400 mm. The application was seasoned for 7 days at 20 °C and 95% RH, and then for 21 days at 20°C and 65% RH. For the test, an aluminum dowel with a diameter of 50 mm and thickness of 30 mm was used, the mortar sample was adhered to the substrate with a two-component resin. The test was carried out with a Pull off Bond strength tester, with Matest E142 digital dynamometer, with a maximum load of 16 kN and with a measurement range from 0.25 to 16 kN.

The average adhesion of the samples was 0.2 MPa, and the type of rupture observed was a cohesive rupture of the mortar for all the samples.

To determine the water absorption coefficient due to capillarity of the hardened mortar, three samples (two aliquots for each sample) were made, which were matured for 2 days at 20 °C and 95% RH inside the mold, then for 2 days at 20 °C and 95% RH, and 21 days at 20 °C and 65% RH. The samples were then conditioned in a stove at 60 °C until constant mass was reached.

The average value of the water absorption coefficient due to capillarity Cm was 16.20 kg/m² 24h.

To determine the apparent volume mass of the dried hardened mortar, three samples were made which were matured for 2 days at 20 °C and 95% RH inside the mold, then for 5 days at 20 °C and 95% RH, and 21 days at 20 °C and 65% RH. The samples were then conditioned in a stove at 60 °C until constant mass was reached.

The average value of the apparent volume mass ρ was measured at 1440 kg/m³.

To determine the thermal conductivity, maintaining the value of 1440 kg/m³ for the apparent volume mass, and using the same samples, the average thermal conductivity λ_{10,dry,mat}, for a tabulated average value P = 50% was 0.44 W/mK, while for a tabulated average value P = 90% it was 0.48 W/mK.

### EXAMPLE 4

A skimming mortar was prepared starting from the composition of example 2 as above. The mortar was used to determine the water vapor transmission properties by means of the capsule method (UNI EN ISO 7783:2019), the liquid water permeability (UNI EN 1062-3:2008), and the direct traction adhesion (UNI EN 1542:2000).

To determine the water vapor transmission properties, three samples were made by diluting the mortar with 25% clean water, and applying the two coats of mortar with a spatula with an application rate of 4.9 kg/m² on a polyethylene sheet. Once dry and separated from the sheet, the samples were cut out and then sealed above the 10 cm diameter test chamber, using microcrystalline wax.

Drying was carried out across 7 days at 23 °C and 50% RH, and a conditioning was carried out at 23 °C and 50% RH until a mass change of less than 1% in a 24-hour interval was obtained (method B of the standard).

During the test, the temperature inside the test chamber was 22 °C and the RH was 55%. These values were considered to calculate the actual partial pressure difference between the test chamber and the capsule.

A thickness of 4500 µm, an average water vapor transmission rate of 217 g/m²d, an average equivalent air thickness Sd of 0.08 m, and an average vapor resistance factor µ of 17 were measured on the samples.

To determine the permeability to liquid water, three samples were prepared by spatula application of two coats on terracotta tiles. The samples were dried for 3 cycles of 24 hours at 23 °C, and for 24 hours at 50 °C. A conditioning was then carried out under the same conditions (3 cycles of 24 hours at 23 °C, and 24 hours at 50 °C).

The average transmissibility value of the liquid water w was measured at 0.79 kg/m²h^{0.5}. This value corresponds to a high permeability class.

To measure the direct traction adhesion, five samples were prepared by spatula application of two coats of mortar, for a thickness of 4 mm on wrinkled RUEN concrete slabs with sizes 400 x 400 x 400 mm. The samples were seasoned for 7 days at 21 °C and 60% RH, and conditioned for 7 days at 21 °C and 60% RH. For the test, an aluminum dowel with a diameter of 50 mm and thickness of 30 mm was used, the mortar sample was adhered to the substrate with a two-component resin. The test was carried out with a Pull off Bond strength tester, with Matest E142 digital dynamometer, with a maximum load of 16 kN and with a measurement range from 0.25 to 16 kN.

The average adhesion was measured at 0.9 MPa, and a break due to lack of cohesion in the first layer was observed for the five samples.

It is clear that modifications and/or additions of parts may be made to the composition and method as described heretofore, without thereby departing from the field and scope of the present invention, as defined by the claims.

It is also clear that, although the present invention has been described with reference to some specific examples, a person of skill in the art will be able to achieve other equivalent forms of method for producing a building product and corresponding composition, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Composition for producing building products, comprising an inert part and a binding part in the form of granulate or powder, **characterized in that** said inert part comprises marine origin aragonite.

2. Composition as in claim 1, **characterized in that** the aragonite is obtained from capulerium, that is, it comprises bivalve shells.

3. Composition as in claim 2, **characterized in that** the capulerium has been subsequently cleaned, dried and ground.

4. Composition as in claim 3, **characterized in that** the capulerium has been dried by heat treatment at a minimum of 200 °C, for at least 45 minutes.

5. Composition as in claim 4, **characterized in that** the capulerium has been dried by heat treatment at 250 °C for 1 hour.

6. Composition as in any claim hereinbefore, **characterized in that** the aragonite represents between 30% and 60% by weight of the total weight of the composition.

7. Composition as in any claim hereinbefore, **characterized in that** the aragonite has a varied granulometry, up to 3 mm, measured by means of sieving.

8. Composition as in claim 7, **characterized in that** the aragonite has a varying granulometry curved from 0 to 3 mm, measured by means of sieving.

9. Composition as in any claim hereinbefore, **characterized in that** said inert part also comprises an aggregate composed of sands, quartz and/or cocciopesto.

10. Composition as in claim 9, **characterized in that** the aggregate has a varied granulometry, up to 3 mm, measured by means of sieving.

11. Composition as in claim 10, **characterized in that** the aggregate has a varying granulometry curved from 0 to 3 mm, measured by means of sieving.

12. Composition as in any claim hereinbefore, **characterized in that** said binding part comprises hydrated lime, metakaolin, pozzolana, or mixtures thereof.

13. Method for producing a composition as in any claim hereinbefore, comprising the steps of preparing an inert part and a binding part, both in the form of granulate or powder, wherein said inert part comprises marine origin aragonite.

14. Method as in claim 13, **characterized in that** it provides, before preparing said inert part and binding part, to prepare capulerium, clean it, dry it and grind it.

15. Method as in claim 14, **characterized in that** drying the capulerium provides a heat treatment thereof at a temperature of at least 200 °C for at least 45 minutes.
